# EUROPEAN PATENT APPLICATION

(11) **EP 4 357 757 A1**
(43) Date of publication of application: **24.04.2024**
(21) Application number: 22383003.5
(22) Date of filing: 19.10.2022
(51) Int. Cl.: G01N 21/21

(54) **DEVICE AND METHOD FOR VECTOR GENERALIZED MAGNETO-OPTICAL ELLIPSOMETRY**

(71) Applicant: Consejo Superior De Investigaciones Científicas, 28006 Madrid (ES); The University Court of the University of Glasgow, Glasgow G12 8QQ (GB); Centre National de la Recherche Scientifique, 75016 Paris (FR); Universidad De Oviedo, 33006 Oviedo (ES)
(72) Inventor: Fernández-Pacheco Chicón, Amalio, Zaragoza (ES); Sanz Hernández, Dédalo, Palaiseau (FR); Cascales Sandoval, Miguel Angel, Glasgow (GB); Hierro Rodríguez, Aurelio, Oviedo (ES)
(74) Representative: Pons

(57) **Abstract**

A magneto-optical device and method based on mapping magneto-optical signals in the Fourier space to perform generalized magneto-optical ellipsometry. The method is based on a focused-beam ellipsometer using circularly-polarised light to record two sets of light intensity patterns on a 2D imaging device. From the two sets of intensity patterns, the optical constants (***nᵣ***,***nᵢ***), magneto-optical constants (***Qᵣ**, **Qᵢ***) and normalized three-dimensional magnetization vector (***m̅***) are accurately obtained.

## Description

### OBJECT OF THE INVENTION

The object of the present invention is a magneto-optical method based on focused-beam ellipsometry to perform generalized magneto-optical ellipsometry. The device is formed by a collimated and polarised light source, an objective e lens, a 2D imaging device, and an algorithm that fits the experimental data to models of the interaction of light with magnetic materials.

The method records two sets of intensity maps, corresponding to right and left circularly-polarized incident light. From the coupling of these polarization states to the magnetization vector, two sets of distinct intensity patterns are recorded in the camera, for a wide range of light wavevectors. From the combined fit of these two maps, values for the optical and magneto-optical constants of the material, as well as its three-dimensional magnetization vector, are obtained with great accuracy.

### BACKGROUND OF THE INVENTION

Magnetic technologies such as the hard disk drive, the Magnetic Random Access Memory (MRAM), the Racetrack Memory or different types of magnetic sensing devices require advanced characterization tools able to detect and analyze complex magnetic states.

In particular, as technologies evolve towards devices with three dimensional magnetic states, vector characterization tools that allow to determine the three components of the magnetization become necessary.

There exist a great number of optical techniques for the characterization of thin films and nanomaterials. In particular, ellipsometry exploits the change of polarization of light upon reflection from a thin film to extract the refractive index coefficients of the material and film thickness with great accuracy.

Ellipsometry has been also applied to optically characterize magnetic materials and films. The technique, called generalized-magneto-optical ellipsometry, allows for quantitative vector magnetometry of magnetic materials (see Applied Physics Letters 71, 965 (1997)).

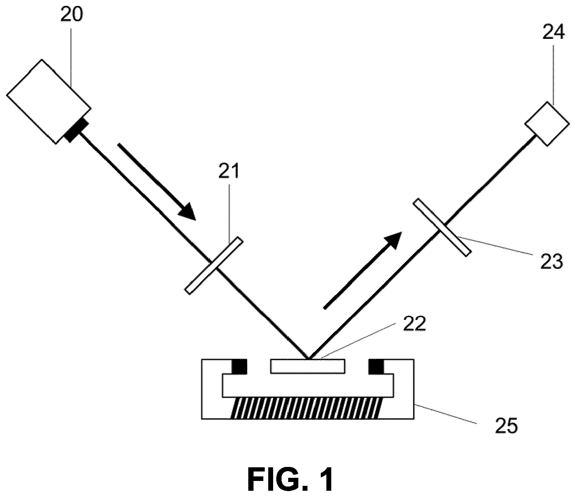

The typical setup to perform these measurements is schematically shown in Figure 1 and explained hereafter. An incoming beam of light from a light source (20) is linearly polarized by a first polarizer (21), focusing on the sample (22) at a given angle. After specular reflection from the sample (22), the light passes through a second polarizer (referred to as the analyzer (23)) whose associated intensity is finally collected by a photodetector (24). The photodetector (24) collects the light intensity as a function of different combinations of polarizer-analyzer orientations, which is uniquely determined by the optical and magneto-optical response of the sample. Magnetic fields are applied to the sample by means of an electromagnet or similar device (25).

Relative changes of light intensity are recorded for several analyzer and polarizer orientations. These signals are then simultaneously fitted to a magneto-optical model based on the electromagnetic Fresnel formalism that incorporates optical, magneto-optical constants, as well as the magnetic state of the sample (22), and the matrix propagation formalism).

The model normally corresponds to samples which are significantly thicker than the penetration depth of light. From the fit, the three components of the magnetization, as well as the optical and magneto-optical constants, are obtained. In other words, it obtains the vector magnetic state of the system, and the real and imaginary parts of both refractive index and Voigt constants.

To perform generalized-magneto-optical ellipsometry, previous schemes require rotating polarizers that produce linearly polarized light for both incident and reflected beams.

Previous procedures for vector optical magnetometry, where the magnetic state of a sample is fully characterized by optical means, also measure light signals at several incident and reflected angles under specular conditions: this exploits the dependence of magneto-optical effects with the k-vector of light. However, the incoming and outgoing optical paths must thus be rotated, complicating the implementation of the optical setup. Also, this difficulty to position the optical components at several angles typically limits the number of k-vector values of light which are finally measured, reducing the accuracy of the method i.e. increasing the error of the parameters obtained from the model.

In these setups, an electromagnet is normally included for the application of external magnetic fields. Magnetic saturation of the sample at different angles is also a typical procedure required for full vector magneto-optical magnetometry, obtaining reference signals to feed the model and enable an accurate fit (see e.g. Appl. Phys. Lett. 77, 1605 (2000)).

Apart from the ellipsometry method described here for the characterization of magnetic materials, there exists a wide range of optical ellipsometers for the study of non-magnetic materials.

Among the different types of optical ellipsometers, Figure 2 shows the main components of a focused-beam ellipsometer, as described in US 8,004,677 B2 and AIP Conference Proceedings 931, 69 (2007). This system employs a linearly-polarized collimated light source (110), in combination with a high numerical aperture lens and a camera detector, to determine the optical properties and thickness of a film with great accuracy.

In detail, light from a light source (110) is first linearly polarized using a polarizer. Then, the beam is focused on a small spot on the sample (150), where it gets reflected. The resulting beam is then collected by the same lens (140), which projects it on a 2D camera sensor, which records the intensity for each pixel.

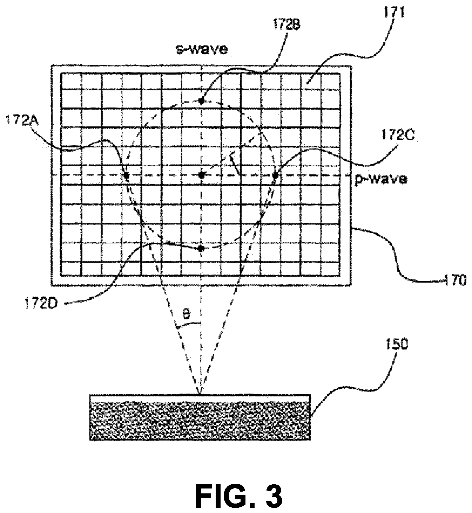

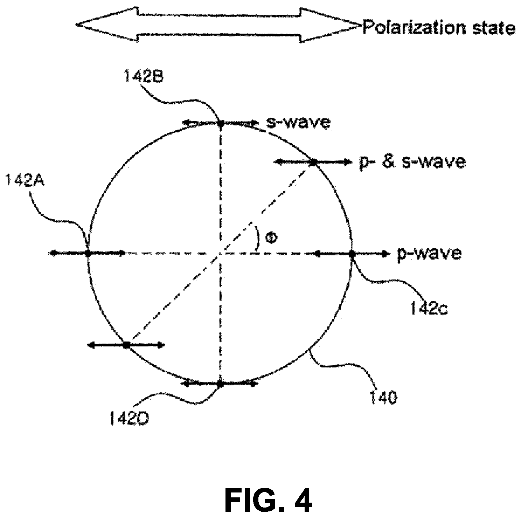

The system exploits an objective lens with a high numerical aperture to send and collect light under specular conditions from a wide range of angles, corresponding to a wide range of k-vectors in the Fourier space. A camera sensor is exploited to obtain the intensity distribution of light: First, as a function of multiple incident and reflected angles θ, which correspond to different radius values of the camera (see Figure 3). This therefore avoids mobile optics which would be required otherwise for the same purpose. Secondly (see Figure 4), the interaction of linearly-polarized incident light with the sample gives as a result an azimuthal ϕ angular variation of the intensity pattern, which depends on the polarization state, i.e. on the relative orientation of the electromagnetic field and the incident k-vector direction. For instance, the polarization state of light is defined as p-wave for ϕ = 0°, and s-wave for ϕ = 90° in the case of horizontal polarization, resulting in different intensity values for both angles.

The resulting light intensity map recorded in the camera at multiple incident angles and for multiple effective incident polarization states is uniquely determined by the sample's optical parameters. Thus, the fitting of this intensity pattern to the model enables to obtain a very precise experimental measurement of the optical properties of the film under investigation.

Focused-beam ellipsometry for the characterization of nonmagnetic materials exploits then linearly-polarized light to break the azimuthal symmetry of the intensity light pattern, defining a unique 2D intensity function I(θ, ϕ) on the camera detector which is key for an accurate fitting. This scheme, however, cannot be readily applied to a magnetic material to perform generalized magneto-optical ellipsometry.

In a magnetic material, the magnetization produces additional terms in the Fresnel coefficients due to the Kerr effect, which give as a result a different pattern of reflected light. This takes place via the magnetization vector and the real and imaginary parts of the Voigt constant, as described by the electromagnetic theory applied to magnetic materials. In general, the magnetization is a three-dimensional vector which produces a complex tensorial coupling of the magnetization to the electric field of light, requiring a different scheme for generalized magneto-optical ellipsometry.

### DESCRIPTION OF THE INVENTION

The present invention is a device and method that performs generalized magneto-optical ellipsometry. The invention uses the principles of focused-beam ellipsometry to map the light intensity pattern upon reflection of a magnetic material using high numerical aperture optics and a camera detector.

The invention records the signal for a wide range of k-vector values without the need of mobile optics. Furthermore, it employs right and left circularly polarized light to obtain two distinct intensity light patterns. The joint fit of these two resulting light intensity 2D functions to the magneto-optical electromagnetic model enables an accurate determination of the optical and magneto-optical constants of a material (real and complex parts) as well as the three components of the magnetization vector.

The device, comprises the following elements:
- a collimated light source
- polarization optics combining a polarizer and a waveplate to set the incoming light from the light source to one of the two circular polarization states, either right or left,
- an objective lens operating at its focal length that sends the collimated light to a magnetic sample of interest for a wide range of wave vectors,
- a 2D imaging device able to record a large range of intensities, for example a camera with a high dynamic range sensor, to map the intensity reflected from the sample in the Fourier space.
- a magnetic field application unit, for example a magnet, electromagnet, or similar device, to apply a static or variable magnetic field to the sample.

The method of the invention uses the described device and is based on the magneto-optical Fresnel equations and the polarization propagator formalism. By recording the intensity patterns corresponding to the two circular polarization states, generalized magneto-optical ellipsometry becomes possible without the need of rotating polarizers and/or optical paths, and with no restriction with respect to the magnetization vector direction.

Particularly, the method comprises the steps of:
- sending a focused circularly-polarized beam formed by a wide range of wave vectors to a magnetic sample with the objective lens,
- collecting the light reflected from the sample with the objective lens,
- projecting the collected light onto a 2D imaging device to access the Fourier space,
- recording the reflected intensity patterns result of the interaction of light with the sample for the two possible circular polarization states (right and left) of incident light,
- fitting together the two recorded intensity patterns for both polarization states to a magneto-optical model using a least squares fitting algorithm or a similar method, and
- obtaining optical constants (***nᵣ***, ***nᵢ***), magneto-optical constants (***Qᵣ***, ***Qᵢ***) and 3D magnetization vector (***̅m̅*̅**).
- possibility of applying a varying magnetic field in the region of the sample to obtain the above parameters for different magnetic states.

The device here described for magnetometry can comprise a position regulating unit e.g. a motorized stage, that moves the beam or the sample, leading to a Scanning Kerr microscope with Generalized magnetic ellipsometry and vectorial magnetometry capabilities.

This invention will potentially be interesting to the following areas of technology:
- technology regarding magneto-optical systems,
- technologies dedicated to magnetic sensing in the automotive industry, bio-magnetics and computing,
- technologies dedicated to magnetic data storage and magnetic memories,
- new magneto-photonic technologies based on the interaction of light with magnetic materials, and
- nanotechnology and magnetic computing technologies.

### DESCRIPTION OF THE DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:
Figure 1.- Shows a schematic representation of the generalized-magneto-optical ellipsometry technique of the state of the art.
Figure 2.- Shows the main components of a focused-beam ellipsometer of the state of the art.
Figure 3.- Shows the intensity distribution as a function of multiple incident and reflected angles θ, which correspond to different radius values, obtained with a camera sensor of a device of the state of the art.
Figure 4.- Shows an azimuthal ϕ angular variation of the intensity pattern, as a result of the interaction of linearly-polarized incident light with a sample, obtained with a camera sensor of a device of the state of the art.
Figure 5.- Shows the simplest possible implementation of the device and method, based on a focused beam ellipsometer.
Figure 6.- Shows a scheme of the main steps of the procedure.
Figure 7.- Shows the physical principles of the method.
Figure 8.- Shows the physical principles of the method.

### PREFERRED EMBODIMENT OF THE INVENTION

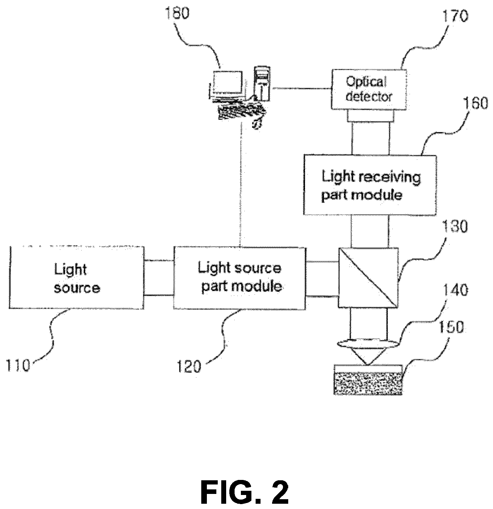

With the help of figures 1-8, a preferred embodiment of the device and method for magneto-optical generalized ellipsometry is described.

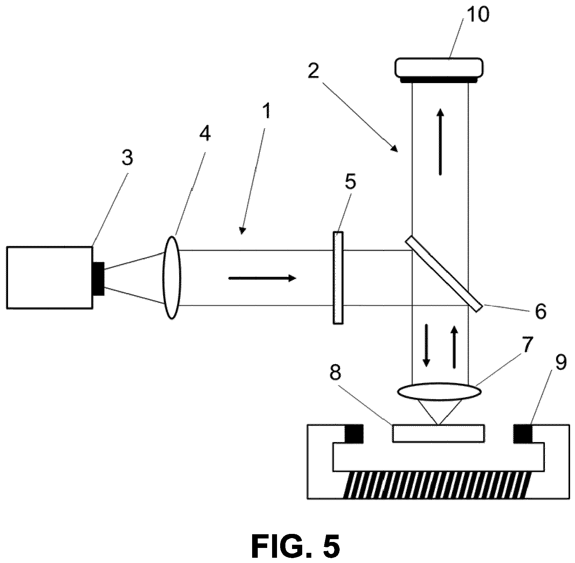

As shown in figure 5, the device comprises an injection path (1) and a detection path (2).

The injection path (1) comprises a light source (3), collimating optics (4) and polarization optics (5). Following these components, the beam splits in two via a beam splitter (6) to fully illuminate an objective lens (7). By going through this lens, the light gets focused on a small spot on the sample under study (8), where it interacts with it and gets reflected. The sample sits in a stage and may subject to external magnetic fields on the area of the beam spot, via an electromagnet or other device capable of applying external magnetic fields (9).

The reflected light is captured in the detection path (2) which comprises, as shown in figure 5, the objective lens (7), the beam splitter (6), and a 2D imaging device (10).

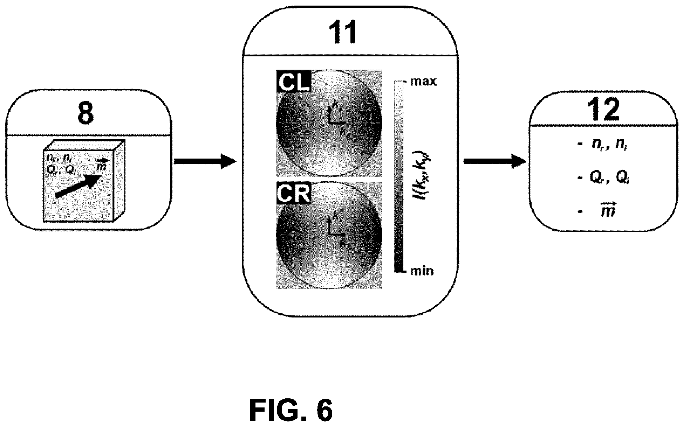

The method of the invention uses the described device and comprises the following steps, schematically represented in figures 5 and 6:
- sending a focused circularly-polarized beam for a wide range of wave vectors to a magnetic sample (8) using the objective lens (7),
- collecting the reflected light corresponding to a wide range of wave vectors coming from the sample (8) with the high numerical objective lens (7),
- projecting the collected light into a 2D imaging device (10) to map the reflected intensity on the Fourier space,
- collecting the light on the 2D imaging device (10) for both left and right circularly polarized states,
- fitting together the two resulting intensity patterns (11) for both polarization states to a magneto-optical model, to obtain the optical and magnetic properties of the sample (8) using a least square fitting algorithm or a similar method which compares the experimentally measured signals with the ones from the model, and
- obtaining (12) optical constants (real and imaginary parts of the refractive index ***nᵣ***, ***nᵢ***), magneto-optical constants (Voigt constants ***Qᵣ**, **Qᵢ***) and 3D normalized magnetization vector (**m̅**).

Thanks to the total optical signal spreading across multiple pixels (N²) of the 2D imaging device, it is possible to detect and analyse the profile of light intensity, result of the interaction of light with the magnetic sample (8). A high dynamic range sensor is required in the 2D imaging device (10) to distinguish the small magneto-optical contribution from the non-magnetic background reflected signal.

The numerical aperture of the objective lens will determine the maximum incidence angle that can be achieved, which in turn determines the degree of coupling to in-plane components. Sensitivity to in-plane components typically peaks at 50 to 60 degrees of incidence (depending on material parameters) with respect to the surface normal. Thus, in order to have the best signal for in-plane magnetization, a numerical aperture allowing for these angles, or even higher, should be used.

To compare the recorded intensity patterns with those from the model, the associated intensities expected from a magnetic sample are computed. This intensity values will depend upon control variables, and unknown or fit variables. The control variables correspond to the incident wave vectors as well as the orientations of the optics within the device e.g., polarization state, k-vector, (all of these are well known), whereas the unknown or fit variables are the optical, magneto-optical constants and magnetization vector, which altogether describe the magneto-optical response of the sample (9) under investigation.

By then utilizing a fitting algorithm like a least squares or similar, which compares the experimentally measured signals with the ones from the model, it is possible to find the values for the previously mentioned unknown parameters.

The method allows to find the direction of the magnetization in the magnetic system while it evolves (for example, during a hysteresis loop or a dynamic transition). The method finds the values of the magnetization by fitting the intensity collected in the 2D imaging device (10) with a low error.

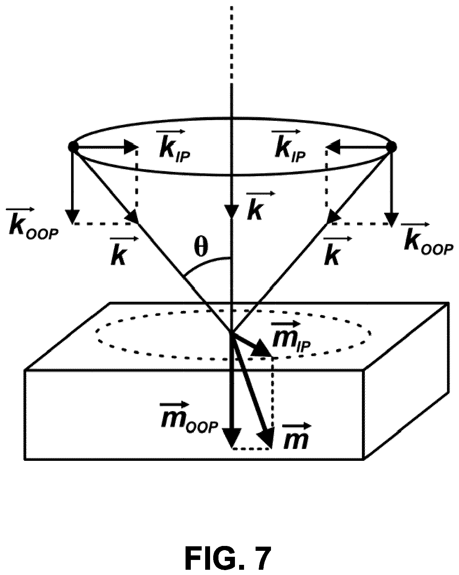

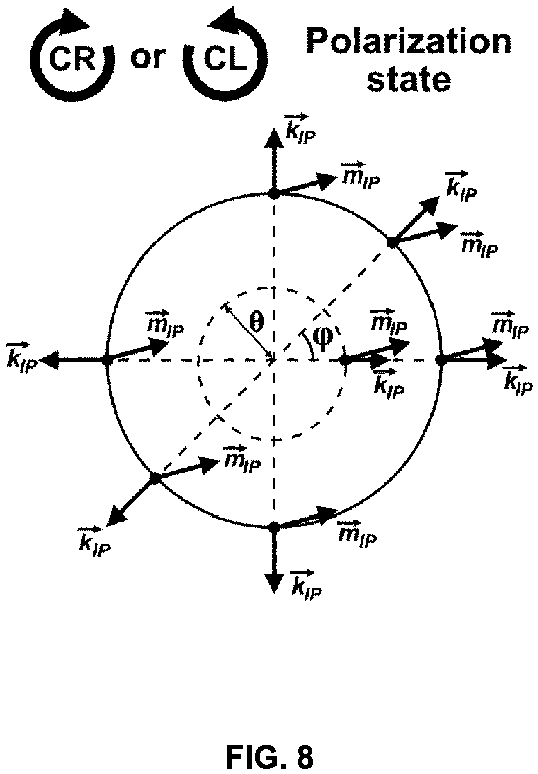

With the help of figures 7 and 8, the physical principles of the invention are now described. Figure 7 shows the incoming beam of light at two different incident angles θ, corresponding to two different k-wavevectors of light. The k-vectors can be decomposed in their in-plane (IP) and out-of-plane (OOP) components with respect to the sample plane (kᵢₚ and kₒₒₚ, respectively). The sample has a magnetic state defined by the vector m, which can also be decomposed in its IP and OOP components (mᵢₚ and mₒₒₚ, respectively).

Figure 8 shows the 2D imaging device (10) plane, where the pixel position is defined by the radius from its centre and the azimuthal angle ϕ. As described before, a focused-beam ellipsometer creates a direct correspondence between the θ incident (and reflected) angle and the radius to the centre of the 2D imaging device (10). The intensity pattern on the 2D imaging device (10) is thus a 2D function I(θ, ϕ), with θ and ϕ as independent variables.

The method described here exploits the coupling of circularly-polarized light to the magnetization vector. Figure 8 shows how the IP component of the magnetization, mᵢₚ, forms a different angle with the IP component of the k vector, kᵢₚ, for each position at the 2D imaging device (10). The contribution of mᵢₚ to the recorded intensity is therefore a function which depends on both θ and ϕ, resulting in a distinct intensity 2D pattern for either of the two circular polarization states employed, either right (CR) or left (CL).

Additionally, Figure 7 shows how the projection of the OOP component of the magnetization vector, mₒₒₚ, on the OOP component of the incident k-vector, kₒₒₚ, is the same for all k-values. This results in a contribution from mₒₒₚ to the reflected intensity which only depends on θ, and not on ϕ. Since this is also the case for the nonmagnetic optical intensity of the material, this method records the intensity patterns for both CL and CR. By doing so, and due to the symmetry of the magneto-optical effect for mₒₒₚ, the intensity pattern for CL has the same magnitude than for CR, but with opposite sign; this is not the case for the nonmagnetic contribution to the intensity, where the same magnitude and sign are obtained for the two polarization states.

The usage of incident light with CL and CR polarization states results in a unique pair of reflected intensity patterns which, by fitting both jointly, is exploited to accurately perform generalized magneto-optical ellipsometry.

## Claims

1. A device for vector magneto-optical generalized ellipsometry based on a focused ellipsometer, that comprises:
- a collimated light source (3, 4)
- a polarizing unit which comprises a polarizer and a waveplate (5) to generate a light beam with circular polarization,
- an objective lens (7) which focuses the light on a beam spot on a magnetic sample (8) of interest placed on a platform, and collects the reflected light for a wide range of wave vectors, and
- a beam-splitter (6) that allows to separate the light incident into the magnetic sample (8) from the light reflected from it,
- a 2D imaging device (10), that receives the reflected light from the magnetic sample (8) and determines intensity patterns (11) from the magnetic sample (8).

2. The device of claim 1, wherein the 2D imaging device (10) is selected between a CCD camera and a CMOS camera.

3. The device of claim 2, wherein it additionally comprises a magnetic unit (9), intended to be associated to the magnetic sample (8), and configured to apply a magnetic field in the region of the magnetic sample (8).

4. The device of claims 2 or 3, wherein it additionally comprises a position regulating unit, to change the position where the magnetic sample (8) is placed to perform scanning generalized magnetic ellipsometry.

5. A method for vector magneto-optical generalized ellipsometry, that uses the device of claim 1, that comprises the steps of:
- sending a focused circularly-polarized beam of light for a wide range of wave vectors to a magnetic sample (8) with the objective lens (7),
- collecting the reflected light at multiple wave vectors from the magnetic sample (8) with the objective lens (7),
- recording a light intensity pattern (11) result of the interaction of left or right circularly polarized light with the magnetic sample (8) as a function of different wave vectors using the 2D imaging device (10),
- changing the polarization state of the incoming light to the opposite circular polarization,
- recording a second light intensity pattern (11) with opposite circular polarization,
- fitting together the two intensity patterns for both polarization states to a magneto-optical model using a least square fitting or similar algorithm, and,
- obtaining optical constants (***nᵣ***, ***nᵢ***), magneto-optical constants (***Qᵣ***, ***Qᵢ***) and 3D magnetization vector (***m̅***).

6. The method of claim 5, wherein the magneto-optical model is based on the magneto-optical semiclassical electromagnetic theory and the polarization propagator formalism.

7. The method of claim 6 in which only either right or left circularly polarized light intensity pattern is recorded and substituting the second light intensity pattern with a simulation or other assumptions.

8. A computer program configured to execute the steps of the method according to any of claims 5 to 7.

9. A storage unit configured to store the computer program according to claim 8.
